# EUROPEAN PATENT APPLICATION

(11) **EP 2 061 272 A2**
(43) Date of publication of application: **20.05.2009**
(21) Application number: 08161154.3
(22) Date of filing: 25.07.2008
(51) Int. Cl.: H04Q 11/00

(54) **Optical switching device and optical receiver**

(30) Priority: 14.11.2007 JP 2007294975
(71) Applicant: Tecdia Co., Ltd., Tokyo 170-6020 (JP)
(72) Inventor: Koyama, Etsuo, Tokyo Tokyo 170-6020 (JP); Nagai, Yasuo, Tokyo Tokyo 170-6020 (JP)
(74) Representative: Brötz, Helmut

(57) **Abstract**

The objective of the present invention is to provide with an optical switching device and optical receiver having a simpler configuration and capable of short range communication with a larger communication band than those respectively of the prior art. The short range optical communication system comprises a plurality of nodes 10, 20, 30, 40, nn and an optical switching device 100. Each node 10, 20, 30, 40, nn has an optical receiver 1 and an optical transmitter 2. The optical switching device 100 performs optical switching to the optical signals entering via incident ports 3 from respective nodes, thereby sending them from sending ports 4. The optical switching device 100 has an optical distributor not shown and a functional optical combiner also not show. The optical distributor distributes common optical signal into all of the outgoing optical transmission lines, each connected to corresponding node. The functional optical combiner partially transmits each individual optical signal entering from corresponding node to one or more predetermined outgoing optical transmission lines. The optical receiver 1 has a beam splitter 11, a first optical detector 12, and a second optical detector 13. The beam splitter 11 splits its incident optical signal into the individual optical signal and the common optical signal. The first optical detector 12 detects the individual optical signal split by the beam splitter 11; and the second optical detector 13 detects the common optical signal slit by the beam splitter 11.

## Description

### BACKGROUND OF THE INVENTION

### Technical Field

The present invention relates to an optical switching device and optical receiver for short range communication, such as in-vehicle LAN (Local Area Network) provided in a car.

### Description of Related Art

The electronic technology and digital technology have remarkably spread to vehicles, construction machines, and the like recently; this is largely supported by a highly reliable transmission line, such as LAN. Nowadays, the in-vehicle LAN also supports such as the car navigation system, the Collision Detection Prevention System, the VICS (Vehicle Information and Communication System), and so on as well as the EUC (Engine Control Unit). Widening the communication band of the in-vehicle LAN is expected to realize high speed communications: such as, those necessary to car motion, car security, and the like, those for automatic control to increase the operability of the window system, door system, and the like, and those for car transportation guide including the so-called car navigation, the VICS and the like.

Hereat, as a well-known in-vehicle LAN today, there is available, for example, CANbus™ provided by Robert Bosch GmbH (refer, for example, Non-patent document 1.) and providing with a communication band of 1 Mbps. However, since the present popular version of the in-vehicle LAN will become difficult to adequately respond to the increasing communication data, development are being directed toward the in-vehicle LAN of the next generation.

### [Non-patent document 1] http://www.decor.co.jp/defa/801xg.html

However, the in-vehicle LAN of the prior art described in the Non-patent document 1 has problem(s) as follows. Owing to its narrow communication band of 1 Mbps as described above, it becomes larger-scale in order to meet its growing use and complex function. For example, such as the gateway and/ or other measures will be necessary to meet these demands, which results in the larger scale. Consequently, the in-vehicle LAN is not enough achievable even the original objective that aims to reduce the weight, as well.

### SUMMARY OF THE INVENTION

Considering the aforementioned state of art, the objective of the present invention is to provide with an optical switching device and optical receiver having a simpler configuration and capable of short range communication with a communication band wider than the prior art.

The present invention provides following configurations in order to achieve the aforementioned objective.
(1) The invention of claim 1 provides with an optical switching device, comprising: an optical distributor for partially propagating common optical signal emanating from a first node to all the other or all of the node via each corresponding outgoing optical transmission line, thereby distributing said common optical signal; and a functional optical combiner for partially propagating each individual optical signal to the predetermined one or more of the outgoing optical transmission lines, thereby combining it/ them with the common optical signal, wherein each individual optical signal is input from corresponding node and has a wavelength different from the other.

(2) The invention of claim 2 provides with an optical receiver for receiving the optical signal from the optical switching device as claimed in claim 1, the optical receiver comprising: a beam splitter for splitting the optical signal from said optical switching device into the individual optical signal and the common optical signal; a first optical detector for detecting the individual optical signal split by said beam splitter; and a second optical detector for detecting the common optical signal split by said beam splitter.

According to the invention of claim 1, it is possible to provide with an optical switching device having a simpler configuration and capable of short range communication with a communication band wider than the prior art. This is supported by the fact that the optical switching device of claim1 comprises an optical distributor and a functional optical combiner that configured as follows. Here, the optical distributor is capable of partially propagating common optical signal emanating from a first node to all the other or all of the node via each corresponding outgoing optical transmission line, thereby distributing the common optical signal. The functional optical combiner is capable of partially propagating each individual optical signal to the predetermined one or more of the outgoing optical transmission lines, thereby combining it/ them with the common optical signal, wherein each individual optical signal is input from corresponding node and has a wavelength different from the other.

According to the invention of claim 2, it is possible to provide with an optical receiver having a simpler configuration and capable of short range communication with a communication band wider than the prior art. This is supported by the fact that the optical receiver for receiving the optical signal from the optical switching device as claimed in claim 1 comprises a beam splitter, a first optical detector, and a second optical detector that have functions as follows. Here, the beam splitter is capable of splitting the optical signal from the optical switching device into the individual optical signal and the common optical signal. The first optical detector is capable of detecting the individual optical signal split by the beam splitter. The second optical detector is capable of detecting the common optical signal split by the beam splitter.

### BRIEF DESCRIPTION OF THE DRAWINGS

FIG. 1 is a block diagram schematically illustrating a short range optical communication system according to the present invention.
FIG. 2 is a block diagram schematically illustrating an exemplary optical receiver according to the present invention.

### DETAILED DESCRIPTION OF THE PREFERRED EMBODIMENTS

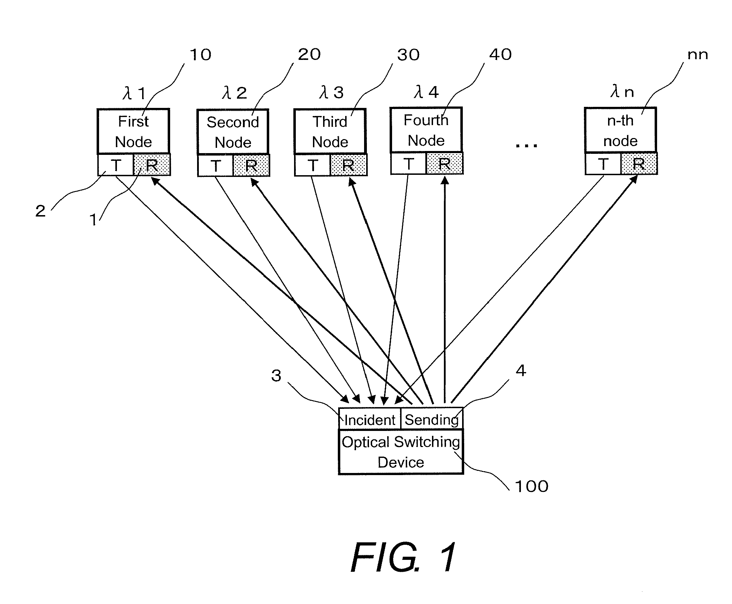

Hereinafter, referring to the accompanying drawings illustrating exemplary configurations, descriptions are made on embodiments according to the present invention. FIG. 1 is a block diagram schematically illustrating a short range optical communication system according to the present invention. The short range optical communication system comprises a plurality of nodes 10, 20, 30, 40, nn and an optical switching device 100. Each node 10, 20, 30, 40, nn has an optical receiver 1 and an optical transmitter 2. The optical switching device 100 performs "optical switching", as will be described in detail below, to the optical signals entering via incident ports 3 from respective nodes 10, 20, 30, 40, nn, thereby sending them from sending ports 4.

The optical switching device 100 has an optical distributor not shown and a functional optical combiner also not show. The optical distributor distributes, for example, common optical signal emanating from the first node 10 into all of the outgoing optical transmission lines, each connected to corresponding node 10, 20, 30, 40, nn. The functional optical combiner partially transmits each individual optical signal entering from corresponding node 10, 20, 30, 40, nn to one or more predetermined outgoing optical transmission lines. Each individual optical signal has different wavelength λ1, λ2, λ3, λ4, λn from each other.

Hereat, the optical distributor may be configured to distribute signal from one optical transmission line to all of the other outgoing optical transmission line, similar to the optical communication apparatus described in the Japanese Patent Application Laid-Open Publication No. S58-016374, and so on. Thus, the optical distributor of this configuration does not distribute, as described above, the common optical signal to all of the outgoing optical transmission lines, but to those except for one connected to the node having sent this common optical signal.

Further, the functional optical combiner combines the common signal with the individual signals using simpler configuration as follows. For example, the individual optical signals penetrates into the optical transmission lines outgoing from the optical distributor through the optical phenomenon such as the proximity effect, the diffraction effect and so on, thereby being combined. For example, the functional optical combiner operates in the case that the individual optical signal from the node 10 is sent to the nodes 20, 30 and the vice verse, as follows. The combiner combines the individual optical signal from the node 10 with the common optical signals in the optical transmission lines outgoing to the nodes 20, 30. Simultaneously, the combiner combines the individual optical signals from the nodes 20, 30 with the common optical signal in the optical transmission line outgoing to the node 10. Then, thus combined each signal transmits toward the corresponding node. Hereat, the functional optical combiner doesn't necessarily have the aforementioned configuration; it may have another configuration, in which the combiner consists of such as a liquid crystal device.

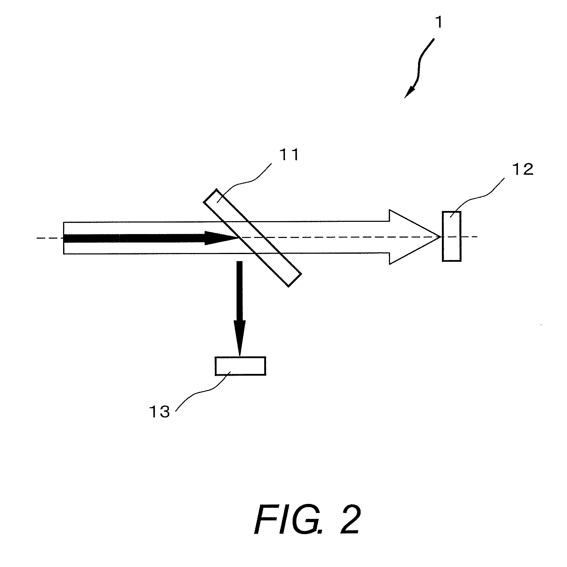

FIG. 2 is a block diagram schematically illustrating an exemplary optical receiver according to the present invention. The optical receiver 1 has a beam splitter 11, a first optical detector 12, and a second optical detector 13. The beam splitter 11 splits its incident optical signal from the aforementioned optical switching device 100 into the individual optical signal and the common optical signal. The first optical detector 12 detects the individual optical signal split by the beam splitter 11; and the second optical detector 13 detects the common optical signal slit by the beam splitter 11.

As shown in FIG. 2, the beam slitter 11 is configured to selectively reflect the incident light with the target wavelength in a tunable manner, while transmitting the remaining. The beam splitter 11 may consist of such as a liquid crystal device capable of altering the target wavelength by adjusting applied voltage and so on. Further specifically, "Tunable wavelength liquid crystal filter" obtainable from TECDIA co. ltd. is available as the beam splitter 11.

Each optical detector 12, 13 consists of such as a photo diode and is capable of detecting the power of, for example, the light reflected by the beam splitter 11 or transmitting therethrough. In the present configuration, the first optical detector 12 detects the individual optical signal, and the second optical detector 13 detects the common optical signal. Thereby, continuous communication becomes possible, since it doesn't necessitate time slots for the communication using such as CANbus™ of the prior art. In addition, since independent communications become possible using the common optical signal and the individual optical signal, independent manipulations become possible such as setting up the communication bandwidth, the communication protocol to be in conformity with and so on and altering them.

The optical switching device and optical receiver according to the present invention is applicable to the short range optical communication, such as the in-vehicle LAN.

## Claims

1. An optical switching device comprising:
an optical distributor for partially propagating common optical signal emanating from a first node to all the other or all of the node via each corresponding outgoing optical transmission line, thereby distributing said common optical signal; and
a functional optical combiner for partially propagating each individual optical signal to the predetermined one or more of the outgoing optical transmission lines, thereby combining it/ them with the common optical signal, wherein each individual optical signal is input from corresponding node and has a wavelength different from the other.

2. An optical receiver for receiving the optical signal from the optical switching device as claimed in claim 1, the optical receiver comprising:
a beam splitter for splitting the optical signal from said optical switching device into the individual optical signal and the common optical signal;
a first optical detector for detecting the individual optical signal split by said beam splitter; and
a second optical detector for detecting the common optical signal split by said beam splitter.
